# EUROPÄISCHE PATENTSCHRIFT

(11) **EP 0 668 676 B1**
(45) Veröffentlichungstag und Bekanntmachung des Hinweises auf die Patenterteilung: **24.07.1996**
(21) Anmeldenummer: 95102015.5
(22) Anmeldetag: 14.02.1995
(51) Int. Cl.: H04J 14/08

(54) **Einmessung von TDMA-Systemen mit einem passiven optischen Netzwerk**
Initial measurement of TDMA systems with a passive optical network
Mésure initiale des systèmes TDMA utilisant un réseau optique passif

(30) Priorität: 21.02.1994 DE 4405461
(43) Veröffentlichungstag der Anmeldung: 23.08.1995
(73) Patentinhaber: SIEMENS AKTIENGESELLSCHAFT, 80333 München (DE)
(72) Erfinder: Horbach, Christian, Dr.-Ing., D-82110 Germering (DE); Glade, Martin, Dr.-Ing., D-81545 München (DE); Hartl, Bernd, Dipl.-Ing., D-82347 Bernried (DE); Keller, Hendrik, Dr.-Ing., D-80805 München (DE)

(56) Entgegenhaltungen:
- EP-A- 0 318 333
- WO-A-92/22151
- WO-A-93/19540
- INTERNATIONAL JOURNAL OF DIGITAL AND ANALOG COMMUNICATION SYSTEMS, JULY-SEPT. 1993, UK, Bd. 6,Nr. 3, ISSN 1047-9627, Seiten 143-149, KELLER H ET AL 'Optical broadband access using ATM on a passive optical network'

## Beschreibung

Die Erfindung betrifft ein Verfahren zur Einmessung von ein passives optisches Netzwerk enthaltenden Systemen.

Optische Systeme der eingangs erwähnten Art sind aus "Optische Übertragungstechnik für flächendeckende Teilnehmeranschlüsse", Hefte 04/1992 (April), 09/1992 (September) und 10/1992 (Oktober) der Zeitschrift "Der Fernmeldeingenieur" (Verlag für Wissenschaft und Leben, Georg Heidecker GmbH Erlangen), insbesondere Seiten 6, 11-13 des Heftes 10/1992 bekannt.

Und "International Journal of Digital and Analog Communication Systems", Heft 6, No 3, Juli-September 1993, Seiten 143-149: H. Keller et al.: "Optical Broadband Access using ATM on a Passive Optical Network".

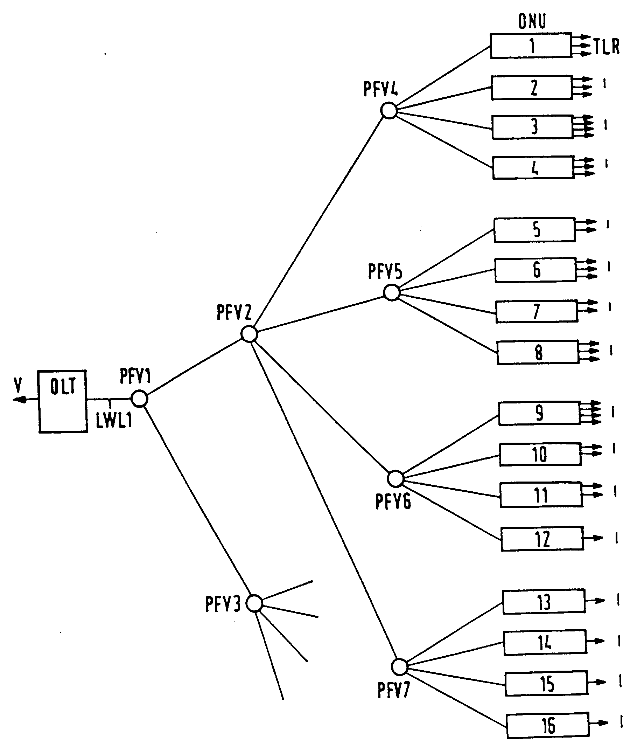

Bei optischen Übertragungssystemen für flächendeckende Teilnehmeranschlüsse wird häufig vom sogenannten TDM/TDMA-Funktionsprinzip Gebrauch gemacht. Dabei sendet eine Zentrale im Zeitmultiplex-(TDM)-Betrieb Daten- und Steuersignale über ein passives optisches Netzwerk (PON), das sich in Form einer Lichtwellenleiter-Baumstruktur von einer Zentraleinheit in Richtung zu teilnehmernahen Abschlußeinheiten aufspaltet, zu teilnehmernahen Abschlußeinheiten. In Gegenrichtung senden die Abschlußeinheiten im TDMA-Betrieb in jeweils vorgeschriebenen Zeitschlitzen Zeitmultiplexsignale enthaltende Signalbursts an die Zentraleinheit zurück. Dabei können für die Übertragung der von der Zentraleinheit stammenden Signale und für die Gegenrichtung jeweils getrennte Lichtwellenleiter-Baumstrukturen verwendet werden; die in Figur 1 dargestellte Grundstruktur eines derartigen Netzes ist im Prinzip aus obengenannter Veröffentlichung Heft 4/1992 Seite 10, Bild 5.1 bekannt. Die Signalbursts enthalten jeweils eine vorangestellte Präambel mit Synchronisierbits und eine sich anschließende Zelle mit dem zu übertragendem Zeitmultiplex-Datensignal.

Eine Weiterentwicklung des vorgenannten Standes der Technik, die der ATM-Übertragung, also der Übertragung von Signalen im asynchronen Übertragungsmodus dient, ist in der Veröffentlichung zum Race Open Workshop on Broadband Access, Nijmegen (Niederlande) vom Juni 1993 unter dem Titel "ATM in the subsriber loop using a Passive Optical Network" von C.Horbach, B.Hartl, M.Glade und H.Keller vorgestellt. Das beschriebene System ist für 8 bis 32 Abschlußeinheiten ONU vorgesehen, die in einem Abstand bis zu etwa 10 Kilometer von der Zentraleinheit OLT angeordnet sein können, so daß sich für die einzelnen Abschlußeinheiten unterschiedliche Signallaufzeiten ergeben. Durch zusätzlich in die Abschlußeinheiten eingefügte Verzögerungsleitungen wird deshalb die Summe der Laufzeiten für Hin- und Rückrichtung für alle Abschlußeinheiten auf einen Wert eingestellt, der der Signallaufzeit der gegenüber der Zentraleinheit am weitesten entfernten Abschlußeinheit entspricht. Voraussetzung ist dabei die möglichst genaue Kenntnis der Signallaufzeiten für die Hin- und Rückrichtung zwischen Zentraleinheit und Abschlußeinheit. Die Ermittlung der Signallaufzeiten erfolgt erstmals beim Anschluß einer neuen Abschlußeinheit und danach periodisch als Teil der Systemüberwachung. Dabei ergibt sich das Problem, daß während des Einmessens die Nutzsignalübertragung unterbrochen ist, so daß während dieser Zeit von der Zentrale OLT sogenannte Leerzellen an die nachgeschaltete Vermittlung übertragen werden müssen, außerdem ist die Regelmäßigkeit der in Zellen übertragenen Signale stark gestört und damit der sogenannte Zelljitter, also die zwischen den einzelnen Zellen auftretenden Phasenschwankungen, erhöht. Durch das regelmäßige Nachmessen der Signallaufzeit kann also die mögliche Datenübertragungsrate des Systems nicht ausgenutzt werden, da die eigentliche Betriebszeit um die Dauer eines Einmeß-Zeitschlitzes plus der Zeit für das Einmeßsignal periodisch verkürzt wird. Durch die Unterbrechung des Datenverkehrs zwischen Abschlußeinheiten ONU und Zentraleinheit OLT wird also entweder die Übertragungsrate reduziert oder die in der jeweiligen Abschlußeinheit ONU zwischengespeicherten Daten müssen nach der Einmessung mit erhöhter Geschwindigkeit übertragen werden. Alternativ kann in der Zentraleinheit OLT im Hinblick auf die gleichmäßige Abgabe der Daten an eine nachgeschaltete Vermittlungseinrichtung erneut eine Zwischenspeicherung der Daten erfolgen, während des Einmeßzeitschlitzes läuft dann dieser Speicher leer und wird anschließend wieder aufgefüllt. Auf diese relativ aufwendige Weise kann zwar der Zelljitter verringert werden, die Gesamtverzögerung des gesamten Übertragungssystems ist aber ständig um die Zeit eines Einmeßschlitzes erhöht.

Die Aufgabe bei der vorliegenden Erfindung besteht also darin, das eingangs erwähnte Verfahren so weiter zu entwikkeln, daß durch das regelmäßige Nachmessen der Signallaufzeit die Signalübertragung zwischen Abschlußeinheit und Zentraleinheit möglichst wenig gestört wird, wobei dieses Verfahren mit möglichst geringen Änderungen auch die Ersteinmessung ermöglichen muß.
Erfindungsgemäß wird die Aufgabe durch ein Verfahren der eingangs erwähnten Art gelöst, das durch Merkmale des Patentanspruchs 1 weitergebildet ist.
Der besondere Vorteil des erfindungsgemäßen Verfahrens liegt in dem Ausgleich zwischen den Forderungen einerseits nach möglichst wenig Zelljitter und andererseits nach möglichst geringer Systemverzögerung. Bevorzugte Ausbildungen des erfindungsgemäßen Verfahrens sind in den Patentansprüchen 2 und 3 beschrieben.
Die Erfindung soll im folgenden anhand eines in der Zeichnung dargestellten Ausführungsbeispiels näher erläutert werden. Dabei zeigt Fig. 1 die Zentraleinheit mit einem Teil des passiven optischen Netzwerkes und einigen Abschlußeinheiten.

In der Figur 1 ist die auch als Optical Line Termination bezeichnete Zentraleinheit OLT über Umsetzer und Regelschaltungen mit einer Vermittlung V auf optischem oder elektrischem Wege verbunden. Die Zentraleinheit OLT enthält einen Laserdiodensender LDS, der im Dauerbetrieb an das angeschlossene passive optische Netzwerk Zeitmultiplexsignale abgibt, die Nachrichten und Steuerbefehle für die auch als Optical Network Unit bezeichneten Abschlußeinheiten ONU1...16(32) enthalten. An den Laserdiodensender der Zentraleinheit OLT ist dabei über einen ersten Lichtwellenleiter LWL1 ein erster passiver Faserverzweiger PFV1 angeschlossen, an den zwei weitere Lichtwellenleiter als Verbindungen zum zweiten und dritten passiven Faserverzweiger PFV2, PFV3 angeschlossen sind. Bei diesen Verzweigern handelt es sich um Vierfach-Verzweiger, so daß an den zweiten Faserverzweiger PFV2 über weitere Lichtwellenleiter ein vierter bis siebenter Faserverzweiger PFV4...PFV7 angeschlossen sind, die nicht dargestellten weiteren Verzweigungen nach dem dritten Faserverzweiger PFV3 entsprechend denen nach den zweiten Faserverzweiger PFV2. Auch bei den vierten bis siebenten passiven Faserverzweigern PFV4...PFV7 handelt es sich um Vierfach-Verzweiger, so daß an den vierten Faserverzweiger PFV4 eine erste bis vierte Abschlußeinheit ONU1..4, an den fünften passiven Faserverzweiger PFV5 eine fünfte bis achte Abschlußeinheit ONU5...8, an den sechsten passiven Faserverzweiger PFV6 eine neunte bis elfte Abschlußeinheit ONU9...11 und an den siebenten passiven Faserverzweiger PVF7 eine 13. bis 16. abgesetzte Einheit ONU13...16 angeschlossen sein können. Im Hinblick auf die Verringerung der Kosten sind an die Abschlußeinheiten ONU1...16 meist nicht nur einzelne Teilnehmer, sondern in der Regel mehrere Teilnehmer TLR beispielsweise über herkömmliche Kupferleitungen angeschlossen. In den Abschlußeinheiten befinden sich dann neben den opto-elektrischen Wandlern auch Multiplexer- und Demultiplexerschaltungen sowie weitere Wandler, die die empfangenen Zeitmultiplexsignale in für den jeweiligen Teilnehmer verständliche Signale umformen.

Bei der schematischen Darstellung entsprechend der Figur 1 ist nicht berücksichtigt, daß die einzelnen Abschlußeinheiten ONU1...16 jeweils eine unterschiedliche Entfernung zur Zentraleinheit OLT und damit unterschiedliche Signallaufzeiten besitzen. Für die Zeitsynchronisation des Burstbetriebs zur Zentraleinheit OLT wird deshalb in jeder der Abschlußeinheiten noch eine Verzögerungseinrichtung benötigt, die nach Empfang des Startsignals von der Zentraleinheit OLT ein für die jeweilige Abschlußeinheit individuelles Startsignal erzeugt. Beim ersten Einmessen, beispielsweise bei der Einschaltung einer neuen Abschlußeinheit, wird im Zeitmultiplexrahmen ein Zeitschlitz mit einer Dauer entsprechend der doppelten maximalen Signallaufzeit zwischen Zentraleinheit und der weitesten entfernten Abschlußeinheit, also der Laufzeit für Hin- und Rückrichtung benötigt, der im folgenden als erster Einmeßschlitz EMS1 bezeichnet wird. Auf Grund der Kenntnisse über die zwischen der Zentraleinheit OLT und der einzumessenden Abschlußeinheit verlegte Lichtwellenleiterlänge kann dabei möglicherweise der erste Einmeßschlitz kürzer bemessen werden, zu berücksichtigen sind aber die üblicherweise auftretenden Längentoleranzen und damit Laufzeittoleranzen. Zur Vergleichmäßigung der Signalübertragung wird vor der ersten Einmessung die Datenübertragungsrate von der Zentraleinheit zur Vermittlung verringert und die sich anstauenden Daten zwischengespeichert. Während der Einmessung werden diese Daten zur Vermittlung gesendet. Während des Betriebes ist zusätzlich zur Ersteinmessung ein regelmäßiges Nachmessen der Signallaufzeit erforderlich, da neben den durch bauliche Veränderungen verursachten Änderungen der jeweils wirksamen Lichtwellenleiterlänge insbesondere durch Temperaturänderungen ständig Längenänderungen der Lichtwellenleiter-Baumstruktur hervorgerufen werden.

Entsprechend der Erfindung wird nun bei der Nachmessung im Betrieb die Zeit für den ersten Einmeßschlitz EMS1 auf die Zeitdauer verringert, die der durch die Änderungen in der Lichtwellenleiter-Baumstruktur erzeugten maximalen Zeitveränderung entspricht. Der während des Betriebs ausgesendete zweite Einmeßschlitz EMS2 ist also nur noch so lang, wie die maximal mögliche Differenz zwischen der effektiven und der bekannten Signallaufzeit und damit erheblich kürzer als der erste Einmeßschlitz EMS1. Beträgt beispielsweise die maximale Entfernung 10 km, muß der erste Einmeßschlitz 100µs dauern, ist aber im laufenden Betrieb die Entfernung mit einer Genauigkeit von 2 km bekannt, benötigt man nur einen Einmeßschlitz EMS2 von 20µs Dauer. Für das erste Einmessen wird also ein Einmeßschlitz EMS1 mit einer Dauer entsprechend der doppelten Signallaufzeit zwischen der Zentraleinheit OLT und der Abschlußeinheit ONU verwendet, für die Betriebsüberwachung ein Einmeßschlitz EMS2 mit einer Dauer entsprechend einem Zeitschlitz für ein übliches Datenpaket zuzüglich der maximal möglichen Laufzeitverlängerung seit der letzten Messung. Durch diese Maßnahme ist die für das Einmessen nötige Datenrate und damit auch der Zelljitter wesentlich herabgesetzt. Während der Betriebs-Einmessung kann damit auf die Absendung von Leerzellen zur Vermittlung verzichtet werden. Stattdessen wird vor der Einmessung der Datenfluß zur Vermittlung leicht reduziert und nach dem Einmeßschlitz EMS2 wird von den in den Abschlußeinheiten ONU enthaltenen Pufferspeichern wahlweise mit der vorgeschriebenen oder mit einer leicht erhöhten Datenrate zur Zentraleinheit gesendet.

## Patentansprüche

1. Verfahren zur Einmessung eines in vorgeschriebenen Zeitschlitzen Zeitenmultiplexsignale enthaltende Signalbursts von teilnehmernahen Abschlußeinheiten zu einer Zentraleinheit übertragenden TDMA-Systems, bei dem die Aussendung der Signalbursts durch die Abschlußeinheiten in Abhängigkeit von einem von der Zentraleinheit ausgesendeten und in den Abschlußeinheiten zusätzlich verzögerten Startsignals erfolgt und dabei die Verzögerung so bemessen ist, daß sich für alle Abschlußeinheiten die gleiche Signallaufzeit zwischen Zentraleinheit und Abschlußeinheit ergibt, und beidem ein für eine Ersteinmessung vorgesehener erster Einmeßschlitz (EMS1) eine Dauer aufweist, die wesentlich länger als die Dauer eines für die Einmessung während des Betriebs verwendeten zweiten Einmeßschlitzes (EMS2) ist, und beidem vor einer Ersteinmessung der Datenfluß von der Zentraleinheit zur Vermittlung reduziert und die nicht übertragenen Daten zwischengespeichert werden, und beidem daß die zwischengespeicherten Daten während der Ersteinmessung zur Vermittlung übertragen werden, und beidem während der Einmessungen in den betroffenen Abschlußeinheiten die zur Übertragung an die Zentraleinheit vorgesehenen Daten zwischengespeichert und beidem diese nach der Einmessung mit einer leicht erhöhten Datenrate an die Zentrale übertragen werden.

2. Verfahren nach Patentanspruch 1,
**dadurch gekennzeichnet,**
daß der für eine Ersteinmessung vorgesehene erste Einmeßschlitz (EMS1) eine Dauer aufweist, die entweder wenigstens der doppelten maximalen Signallaufzeit zwischen der Zentraleinheit (OLT) und der von dieser am weitesten entfernten Abschlußeinheit (ONU) entspricht oder auf Grund der Kenntnisse über die zwischen der Zentraleinheit (OLT) und der einzumessenden Abschlußeinheit (ONU) verlegte Lichtwellenleiterlänge und der dabei auftretenden Längentoleranzen kürzer bemessen wird.

3. Verfahren nach Patentanspruch 1,
**dadurch gekennzeichnet,**
daß der für die Einmessung während des Betriebs vorgesehene zweite Einmeßschlitz (EMS2) eine Dauer aufweist, die wenigstens der Dauer für ein Burstsignal zuzüglich der maximal möglichen Laufzeitverlängerung zwischen Abschlußeinheit und Zentraleinheit seit der letzten derartigen Messung entspricht.

## Claims

1. Method for the calibration of a TDMA system, which transmits signal bursts containing time multiplex signals in prescribed time intervals from termination units in the vicinity of subscribers to a central unit, in which system the transmission of the signal bursts is carried out by the termination unit as a function of a starting signal which is transmitted from the central unit and is additionally delayed in the termination units, and the delay is in this case dimensioned such that the same signal propagation time between the central unit and the termination unit results for all the termination units,
and in which system a first calibration slot (EMS1), which is provided for a first calibration, has a duration which is significantly longer than the duration of a second calibration slot (EMS2), which is used for calibration during operation,
and in which system, before a first calibration, the data flow from the central unit to the exchange is reduced and the data which are not transmitted are buffered,
and in which system the buffered data are transmitted to the exchange during the first calibration,
and in which system, during the calibration, the data which are provided for transmission to the central unit are buffered in the termination units affected,
and in which system, after the calibration, these data are transmitted to the central unit at a slightly increased data rate.

2. Method according to Patent Claim 1, characterized in that the first calibration slot (EMS1), which is provided for a first calibration, has a duration which corresponds either to at least twice the maximum signal propagation time between the central unit (OLT) and that termination unit (ONU) which is furthest therefrom or, is dimensioned to be shorter, on the basis of knowledge about the optical fibre length laid between the central unit (OLT) and the termination unit (ONU) to be calibrated, and the tolerances occurring in said lengths.

3. Method according to Patent Claim 1, characterized in that the second calibration slot (EMS2), which is provided for the calibration during operation, has a duration which corresponds at least to the duration of one burst signal plus the maximum possible propagation time prolongation between the termination unit and the central unit since the last such measurement.

## Revendications

1. Procédé d'étalonnage d'un système à accès multiple par répartition dans le temps transmettant, dans des créneaux temporels prescrits, des salves de signaux comprenant des signaux de multiplexage temporel, d'unités terminales proches d'abonnés à une unité centrale, dans lequel on effectue l'émission des salves de signaux par les unités terminales en fonction d'un signal de départ émis par l'unité centrale, et en outre retardé dans les unités terminales, ce retard étant prévu de telle manière que l'on obtienne, pour toutes les unités terminales, le même temps de propagation des signaux entre unité centrale et unité terminale,
dans lequel un premier créneau d'étalonnage (EMS1), prévu pour un premier étalonnage, a une durée qui est sensiblement plus longue que la durée d'un deuxième créneau d'étalonnage (EMS2) utilisé pour l'étalonnage pendant le fonctionnement, dans lequel on réduit, avant un premier étalonnage, le flux de données, provenant de l'unité centrale pour la commutation, on mémorise temporairement les données non transmises, et dans lequel on transmet les données mémorisées temporairement pendant le premier étalonnage pour la commutation, dans lequel on mémorise temporairement, pendant les étalonnages dans les unités terminales concernées, les données prévues pour transmission à l'unité centrale,et dans lequel on les transmet au central, après l'étalonnage, à un débit de données légèrement augmenté.

2. Procédé selon la revendication 1,
caractérisé par le fait que
le premier créneau d'étalonnage (EMS1), prévu pour un premier étalonnage, a une durée, qui soit correspond au moins à deux fois le temps maximal de propagation du signal entre l'unité centrale (OLT) et l'unité terminale (ONU) la plus éloignée de celle-ci, soit est prévue plus courte, en raison des connaissances de la longueur de guides d'ondes lumineuses installée entre l'unité centrale (OLT) et l'unité terminale (ONU) à étalonner, ainsi que des tolérances de longueur intervenant alors.

3. Procédé selon la revendication 1,
caractérisé par le fait que
le deuxième créneau d'étalonnage (EMS2), prévu pour l'étalonnage pendant le fonctionnement, a une durée, qui correspond au moins à la durée pour un signal en salve, ajoutée à la prolongation maximale possible du temps de propagation entre unité terminale et unité centrale, depuis la dernière mesure de ce type.
